# EUROPÄISCHE PATENTSCHRIFT

(11) **EP 1 479 280 B1**
(45) Veröffentlichungstag und Bekanntmachung des Hinweises auf die Patenterteilung: **14.06.2017**
(21) Anmeldenummer: 04008199.4
(22) Anmeldetag: 05.04.2004
(51) Int. Cl.: A01D 41/127, A01F 7/06

(54) **Vorrichtung und Verfahren zum Trennen eines Erntegutstroms**
Device and process for separating a flow of crop material
Dispositif et procédé de separation d'un flux de produits de récolte

(30) Priorität: 23.05.2003 DE 10323788
(43) Veröffentlichungstag der Anmeldung: 24.11.2004
(73) Patentinhaber: CLAAS Selbstfahrende Erntemaschinen GmbH, 33428 Harsewinkel (DE)
(72) Erfinder: Baumgarten, Joachim, Dr., 48361 Beelen (DE); Holtmann, Bernd, 48324 Sendenhorst (DE); Scholle, Hendrik, 32051 Herford (DE); Peters, Heinz, 48231 Warendorf (DE)

(56) Entgegenhaltungen:
- EP-A- 1 284 098
- US-A- 4 311 995
- US-A- 4 360 998
- US-A- 5 334 093
- US-A- 5 775 072

## Beschreibung

Die vorliegende Erfindung betrifft eine Vorrichtung zum Trennen eines Erntegutstroms, der wenigstens zwei Materialanteile, als Nutzmaterial bzw. Abfallmaterial bezeichnet, enthält, in einen Nutzmaterialstrom und einen Abfallmaterialstrom, in denen jeweils das Nutzmaterial bzw. das Abfallmaterial konzentriert sind.

Derartige Vorrichtungen, die vielfach in Erntemaschinen, insbesondere in Mähdreschern vorkommen, haben in der Regel einen zweistufigen Aufbau mit einer ersten Trennstufe, der der Erntegutstrom, im Falle eines Mähdreschers also die geschnittenen Getreidehalme, zugeführt wird, und die eine Abscheidefläche mit einer Vielzahl von Öffnungen aufweist, durch die ein bevorzugt aus dem Nutzmaterial bestehender Strom, als vorgereinigter Strom, hindurchtritt, während das Abfallmaterial überwiegend zurückgehalten wird. Im Falle eines Mähdreschers besteht der vorgereinigte Strom aus Korn und kleinteiligem Nichtkornmaterial wie etwa Spelzen, kleinen Halmbruchstücken etc., während das zurückgehaltene, getrennt abgeführte Abfallmaterial im Wesentlichen aus den ausgedroschenen Halmen besteht. Eine zweite Trennstufe ist vorgesehen, um den vorgereinigten Strom nachzureinigen, speziell also die Nichtkornbestandteile zu beseitigen.

Um eine gleichmäßige Reinigungswirkung an dem zu diesem Zweck auf einem Förderboden der zweiten Trennstufe verteilten vorgereinigten Strom zu erzielen, ist es wichtig, dass der Strom sich auf dem Förderboden gleichmäßig verteilt. Eine solche gleichmäßige Verteilung ist jedoch nicht ohne weiteres zu erreichen. Die einfachste Möglichkeit, den vorgereinigten Strom auf dem Förderboden zu verteilen ist, diese so unter der Abscheidefläche der ersten Trennstufe zu platzieren, dass das durch die Abscheidefläche durchtretende Material unmittelbar auf die Förderböden fällt. Leider ist jedoch der Durchsatz an vorgereinigtem Material pro Flächeneinheit der Abscheidefläche örtlich variabel. Wenn der Erntegutstrom über die Abscheidefläche hinwegbewegt wird, nimmt der darin enthaltene Anteil an Nutzmaterial und damit der Durchsatz durch die Abscheidefläche in der Förderrichtung des Erntegutstroms kontinuierlich ab. Eine Ungleichverteilung quer zur Förderrichtung kann sich aus der in der ersten Trennstufe eingesetzten Trenntechnik ergeben. Wenn das Erntegut trocken ist und gering verdichtet durch die erste Trennstufe gefördert wird, so ist die Beweglichkeit des Nutzmaterials im Erntegutstrom hoch. Wenn etwa die Trennfläche in Form einer zylindrischen Wanne einen das Erntegut fördernden Rotor auf wenigstens einem Teil seines Umfangs umgebend angeordnet ist, so neigt das Nutzmaterial dazu, sich an der tiefsten Stelle der Wanne zu sammeln und infolgedessen vorzugsweise dort, weniger aber an seitlich davon liegenden, höheren Bereichen der Abscheidefläche durchzutreten, und so unter der tiefsten Stelle eine dickere Schicht als anderenorts zu bilden. Wenn umgekehrt das Erntegut feucht und/oder stark verdichtet und infolgedessen die Beweglichkeit des Nutzmaterials gering ist, so macht sich ein gegenteiliger Effekt bemerkbar. Da der Durchsatz an vorgereinigtem Material am Boden der Wanne und an seitlich davon liegenden, schrägen Bereichen im Wesentlichen gleich ist, die schrägen Bereiche aber pro Flächeneinheit der darunterliegenden Förderböden mehr Durchtrittsfläche aufweisen als der Boden der Wanne, gelangt mehr vorgereinigtes Material an diesen seitlichen Bereichen entsprechende Abschnitte der Förderböden als auf einen dem Boden der Wanne entsprechenden mittleren Abschnitt.

Die EP 1 284 098 A1 beschreibt einen Axialtrennrotor, der in axialer Richtung des Axialtrennrotors gesehen Schließklappen aufweist, deren Betätigung den Ort der frühesten Abscheidung in axialer Richtung verändert. Das Variieren des Ortes der frühesten Abscheidung verändert das Verhältnis von Körnern und Beimengungen im Erntegutstrom, welche einer Reinigungseinrichtung zugeführt werden. Hierzu sind die Schließklappen derart ausgebildet, dass sie die Abscheidefläche entweder vollständig verschließen oder freigeben, um den frühesten Abscheidebereich in axialer Richtung zu verschieben, um den Beginn der Abscheidung derart zu verändern, dass sich ein entsprechend großer Körneranteil im äußeren Bereich des in der Axialtrennvorrichtung umlaufenden Erntegutstromes einstellt, um den Anteil der Beimengungen gering zu halten.

Aufgabe der Erfindung ist, eine zweistufige Vorrichtung zum Trennen eines Erntegutstroms anzugeben, bei der unabhängig vom Zustand des Erntegutes eine hohe Effektivität der zweiten Trennstufe erreichbar ist.

Die Aufgabe wird gelöst durch eine Vorrichtung mit den Merkmalen des Anspruchs 1. Durch die Einstellbarkeit der Durchlässigkeit der einzelnen Abschnitte der Abscheidefläche wird die Möglichkeit geschaffen, deren Durchsatz nach Bedarf so anzupassen, dass für alle Abschnitte eine im Wesentlichen gleiche Materialmenge und damit eine gleiche Effektivität der Nachreinigung in jedem Abschnitt der Förderböden der zweiten Reinigungsstufe erreicht wird.

Während bei der Abscheidefläche die einzelnen Abschnitte dadurch definiert sind, dass jedem dieser Abschnitte jeweils Mittel zum Einstellen von dessen Durchlässigkeit unabhängig von den anderen Abschnitten zugeordnet sind, ist die Aufteilung der Förderböden in die einzelnen Abschnitte nicht notwendigerweise durch konstruktive Merkmale der Förderböden gegeben, sondern kann einfach darin beruhen, dass als ein Abschnitt der Förderböden derjenige Bereich ihrer Oberfläche aufgefasst wird, auf dem durch einen gegebenen Abschnitt der Abscheidefläche hindurchgetretenes Material landet.

Die Abschnitte eines jeden Förderbodens liegen vorzugsweise quer zu der Förderrichtung des vorgereinigten Materials auf dem Förderboden nebeneinander; das heißt es gibt im Betrieb der Vorrichtung keinen nennenswerten Übertritt von Material von einem Abschnitt des Förderbodens zu einem anderen.

An der Abscheidefläche liegen die einzelnen Abschnitte vorzugsweise quer zu einer Förderrichtung des Erntegutstroms in der ersten Trennstufe nebeneinander, um so insbesondere denjenigen Ungleichverteilungseffekten gegenregeln zu können, die sich aus einer Zylinderform der Abschneidefläche ergeben können. Denkbar wäre aber auch eine Unterteilung in Abschnitte in der Förderrichtung, um die Menge an pro Längeneinheit der Abscheidefläche in Förderrichtung durch diese hindurchtretendem vorgereinigten Material Vereinheitlichen zu können.

Zweckmäßigerweise sind einem oder mehreren der Abschnitte der Förderböden wenigstens ein Sensor zum Abschätzen der Menge an vorgereinigtem Material auf dem Abschnitt zugeordnet. Derartige Sensoren können eingesetzt werden, um es einer Bedienungsperson zu ermöglichen, anhand objektiver Erfassungsergebnisse die Durchlässigkeit der einzelnen Abschnitte der Abscheidefläche einzustellen; vorzugsweise ist allerdings eine Steuereinheit vorgesehen, die an die Sensoren und an verstellbare Elemente der ersten Trennstufe angeschlossen ist, um deren Durchlässigkeit anhand der Abschätzungsergebnisse der Sensoren automatisch zu regeln.

Die Steuereinheit kann auch genutzt werden, um die Gesamtmenge des von den Sensoren abgeschätzten vorgereinigten Materials zu ermitteln und einen Befehl zum Verringern der Fahrgeschwindigkeit der Vorrichtung, wenn die abgeschätzte Gesamtmenge einen Grenzwert überschreitet, oder zum Erhöhen der Fahrgeschwindigkeit, wenn die Gesamtmenge einen Grenzwert unterschreitet, zu liefern. Die Steuereinheit kann unmittelbar an ein Antriebsaggregat der Vorrichtung gekoppelt sein, welches den Befehl empfängt, um so die Geschwindigkeit der Vorrichtung vollautomatisch an eine Grenzwertüber- oder -unterschreitung anzupassen. Es kann aber auch ein Anzeigeelement vorgesehen werden, das an die Steuereinheit gekoppelt ist, um deren Befehl zu empfangen und einem Bediener der Vorrichtung anzuzeigen, wobei es in diesem Falle der Entscheidungsfreiheit des Bedieners überlassen bleibt, ob der Befehl befolgt wird oder nicht.

Weitere Merkmale und Vorteile der Erfindung ergeben sich aus der nachfolgenden Beschreibung eines Ausführungsbeispiels unter Bezugnahme auf die beigefügten Figuren. Es zeigen:
- Fig. 1: einen schematischen Schnitt durch einen Mähdrescher, an dem die vorliegende Erfindung realisiert ist;
- Fig. 2: ein vergrößertes Detail eines gegenüber Fig. 1 etwas abgewandelten Mähdreschers;
- Fig. 3: einen Querschnitt durch den Mähdrescher in Höhe der Linie III-III aus Fig. 1.

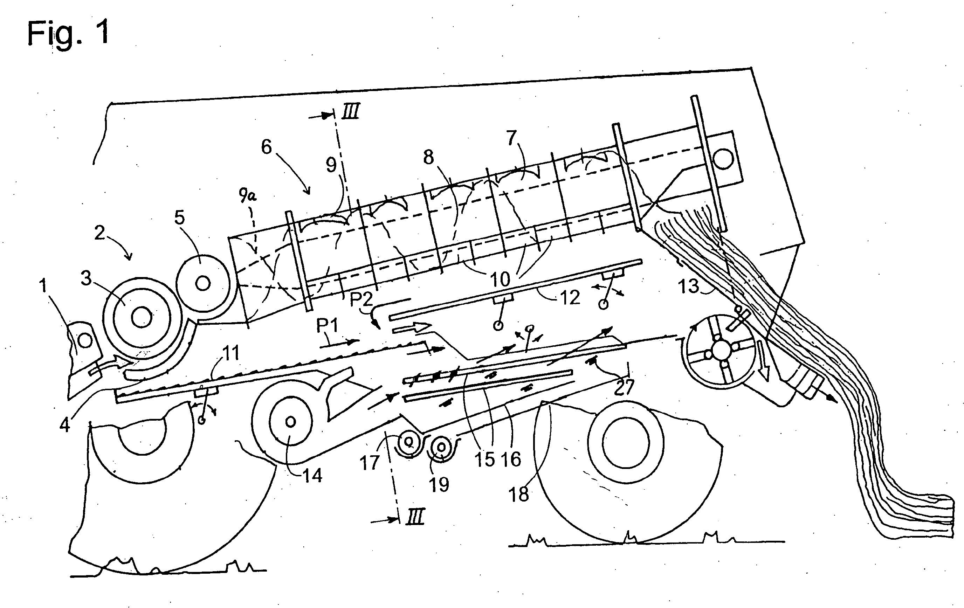

Fig. 1 zeigt einen schematischen Schnitt durch den hinteren Bereich eines Mähdreschers als Beispiel für eine erfindungsgemäße Trennvorrichtung. Bei einem solchen Mähdrescher ist ein zu trennender Erntegutstrom durch gemähtes Getreide gebildet, und Ziel der Trennung ist, einen Nutzmaterialstrom, der in möglichst reiner Form die Körner des Getreides enthält, und einen Abfallmaterialstrom aus den Nichtkornbestandteilen zu gewinnen. Im nicht gezeigten vorderen Bereich des Mähdreschers wird das gemähte Getreide von einem Mähtisch aufgenommen und von einer nur ausschnittweise dargestellten Fördereinrichtung 1 einer tangential wirkenden Drescheinrichtung 2 zugeführt. Die Drescheinrichtung 2 ist im Wesentlichen aufgebaut aus einer Dreschtrommel 3 mit quer zur Fahrrichtung des Mähdreschers orientierter Achse, die an ihrem Außenmantel mit Reibelementen bestückt ist und auf einem Teil ihres Umfangs von einem Dreschkorb 4 umgeben wird. Ein Teil der in der Drescheinrichtung 2 von den Halmen getrennten Körner fällt durch Löcher des Dreschkorbes 4 auf einen Förderboden 11, auf dem diese, wie durch einen Pfeil P1 angedeutet, entgegen der Fahrtrichtung des Mähdreschers durch Rüttelbewegungen gefördert werden.

Der Hauptstrom des Mähgutes wird jedoch zwischen Dreschtrommel 3 und Dreschkorb 4 hindurchgeführt und mit Unterstützung durch eine Leittrommel 5 einer Abscheideeinrichtung 6 zugeführt.

Die Abscheideeinrichtung 6 ist hier rein exemplarisch dargestellt als ein zylindrisches, an seinen Enden offenes Gehäuse 7, in dem über seine gesamte Länge ein Förderorgan 8 drehantreibbar gelagert ist. Durch die Drehung des Förderorgans 8 wird das Mähgut auf einer schraubenlinienförmigen Bahn durch die Abscheideeinrichtung 6 gefördert. Von einer Oberseite des Gehäuses 7 ins Innere vorstehende Rippen 9 fördern in Zusammenwirkung mit dem äußeren Rand der Wendel 9a des Förderorgans 8 die Entmischung des Gutes. Die Steigung der Rippen 9 in Bezug auf die Förderrichtung des Mähguts im Gehäuse 7 ist verstellbar. Dadurch kann die Fördergeschwindigkeit des Mähguts in der Abscheideeinrichtung 6 variiert werden. Die Fördergeschwindigkeit muss groß genug sein, damit am Eingang der Abscheideeinrichtung 6 keine Verstopfung auftritt; andererseits sollte sie möglichst klein sein, um eine lange Verweildauer des Mähguts in der Trenneinrichtung und eine möglichst vollständige Abtrennung des Korns zu erreichen.

Selbstverständlich kann die Fördergeschwindigkeit auch über die Drehzahl des Förderorgans 8 beeinflusst werden. Mit steigender Drehzahl des Förderorgans 8 wächst nicht nur die Fördergeschwindigkeit, sondern auch die Fliehkraft und damit die Kraft auf das Nutzmaterial, die dessen Abscheidung antreibt. Gleichzeitig nimmt jedoch die Verweildauer des Mähguts in der Trenneinrichtung ab. Die beste Drehzahl des Förderorgans ist die, bei der Abscheidekraft und Verweildauer ein gemeinsames Abscheideoptimum erreichen.

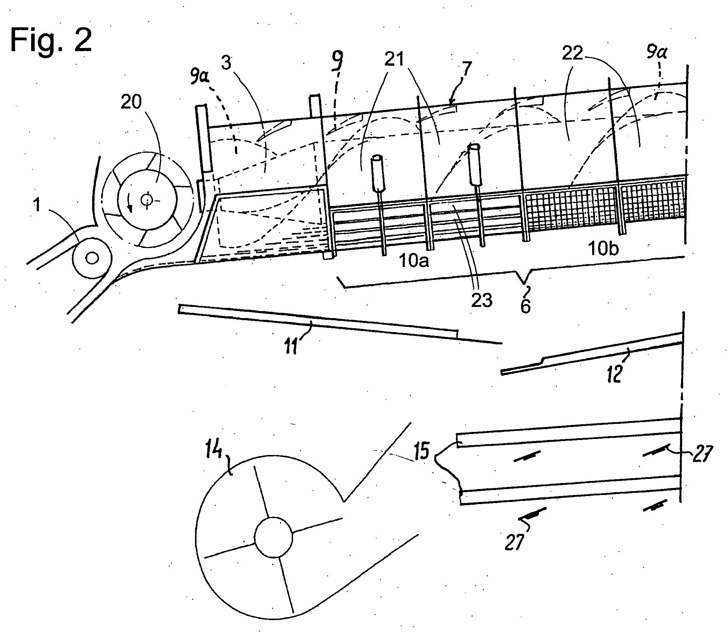

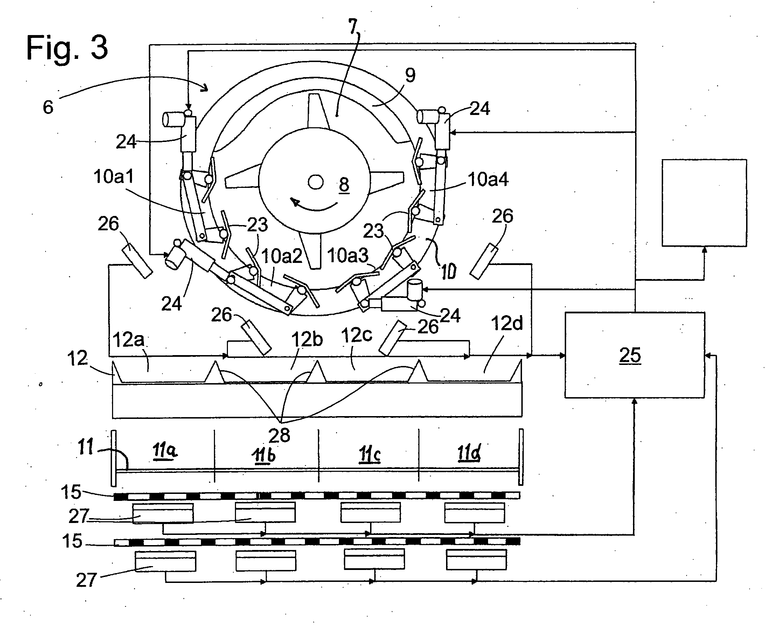

Der untere Bereich des Gehäuses 7 ist durch Abscheidekörbe bzw. Abscheideflächen 10 gebildet, die Öffnungen mit einstellbaren Abmessungen aufweisen. Der Aufbau dieser Abscheidekörbe 10 wird an späterer Stelle mit Bezug auf Fig. 2 und 3 noch genauer erläutert.

Körner, Spreu und Feinstroh, die durch die Öffnungen der Abscheidekörbe 10 aus der Abscheideeinrichtung 6 herausgeschleudert werden, fallen bereichsweise auf den Förderboden 11 bzw. einen sogenannten Rückführboden 12. Dieser Rückführboden 12 ist rüttelnd bewegt, so dass auf ihm gesammeltes Material in Fahrtrichtung des Mähdreschers in Richtung des Pfeils P2 befördert wird und schließlich auf dem Förderboden 11 mit dem bereits in der Drescheinrichtung 2 abgeschiedenen Korn zusammentrifft, um einen Materialstrom zu bilden, der hier als vorgereinigter Strom bezeichnet wird.
Das während des Durchgangs durch die Abscheideeinrichtung 6 weitestgehend vom Korn befreite Grobstroh wird am rückseitigen Ende der Abscheideeinrichtung 6 ausgeworfen und fällt über eine Rutsche 13 zurück auf den Boden.
Die Drescheinrichtung 2 und die Abscheideeinrichtung 6 bilden so eine erste Trennstufe oder Abscheidestufe, die einerseits den vorgereinigten Strom und andererseits einen aus dem ausgedroschenen Stroh bestehenden ersten Abfallmaterialstrom liefert.
Eine zweite Trennstufe oder Reinigungsstufe ist im Wesentlichen aufgebaut aus einem Gebläse 14 und einer im Windstrom des Gebläses 14 liegenden Gruppe von Siebböden 15, die in einem nicht dargestellten Rahmengestell zu einer Schwingbewegung angetrieben sind und mit dem vorgereinigten Strom beschickt werden. Das im vorgereinigten Strom enthaltene Korn rieselt durch die schwingenden Siebböden 15 hindurch auf einen abschüssigen ersten Leitboden 16. Am unteren Ende des Leitbodens 16 ist eine Förderschnecke 17 angeordnet, die das Korn zu einem Elevator (nicht dargestellt) und über diesen in einen Korntank (nicht dargestellt) fördert.

Leichte Bestandteile des vorgereinigten Stroms werden während des Siebens vom Wind des Gebläses 14 mitgenommen und als ein zweiter Abfallstrom auf den Boden ausgeschieden. Grobe Bestandteile, insbesondere um ausgedroschene Fruchtstände des vorgereinigten Stroms, die die Siebböden 15 überquert haben, ohne durchgesiebt oder vom Gebläsewind mitgenommen zu werden, fallen schließlich auf einen zweiten abschüssigen Leitboden 18 und werden von einer an dessen unteren Ende angeordneten Förderschnecke 19 zurück zur Drescheinrichtung 2 oder zur Abscheideeinrichtung 6 gefördert, um diese erneut zu durchlaufen.

Fig. 2 zeigt einen Teil einer zweiten Ausgestaltung eines erfindungsgemäßen Mähdreschers. Sie unterscheidet sich von der Ausgestaltung der Fig. 1 dadurch, dass die Dreschtrommel 3 der Abscheideeinrichtung 6 in axialer Verlängerung vorgesetzt ist, und dass zwischen der Fördereinrichtung 1 und der Dreschtrommel eine quer zur Fahrtrichtung des Mähdreschers fördernde Schnecke 20 angeordnet ist, die das Mähgut in seitlicher Richtung zusammenrafft und dem Eingang der Drescheinrichtung 3 zuführt. Der Aufbau der Abscheideeinrichtung 6 und der nachfolgenden zweiten Trennstufe ist der gleiche wie bei der Ausgestaltung nach Fig. 1.

Wie in Figur 2 im Detail zu erkennen ist, setzt sich das Gehäuse 7 der Abscheideeinrichtung 6 aus mehreren axial aufeinander folgenden Segmenten 21, 22 zusammen, die sich durch die in ihrem unteren Bereich angebrachten Abscheidekörbe 10a, 10b unterscheiden. Während die Abscheidekörbe 10b der hinteren Segmente 22 in herkömmlicher Weise durch ein Drahtgitter gebildet sind, dessen Öffnungen feste Abmessungen haben, setzen sich die Abscheidekörbe 10a der vorderen Segmente 21 aus einer Mehrzahl von in Umfangsrichtung gestaffelten Lamellen 23 zusammen. Wie in dem Querschnitt der Fig. 3 zu erkennen ist, sind die Lamellen jeweils um eine zur Längsachse der Förderschnecke 8 parallele Achse schwenkbar, und mehrere benachbarte Lamellen 23 sind jeweils durch Viergelenke gekoppelt, so dass ihre Schwenkstellung durch einen gemeinsamen Linearaktor 24 gesteuert ist. Der Grad der Schrägstellung der Lamellen 23 beeinflusst zum einen die Breite der Spalte zwischen den Lamellen 23 und damit die freie Querschnittsfläche, über die Korn und Feinstroh aus der Abscheideeinrichtung 6 austreten können, und zum anderen das Ausmaß, in dem freie Kanten der Lamellen 23 in die Abscheideeinrichtung 6 hineinragen und Prallflächen für das Mähgut bilden, an denen dieses zusätzlich ausgedroschen wird.

In Fig. 3 sind die Lamellen 23 zu vier jeweils durch einen gemeinsamen Linearaktor 24 gesteuerte Gruppen zusammengefasst. D.h. der Abscheidekorb 10a ist quer zur Förderrichtung in vier jeweils einer Gruppe der Lamellen 23 entsprechenden Abschnitte 10a1, 10a2, 10a3, 10a4 unterteilt, deren Durchlässigkeit durch Schwenken der Lamellen individuell einstellbar ist. Eine elektronische Steuereinheit 25 steuert die Schwenkstellung jeder Gruppe von Lamellen 23 unabhängig von den anderen. Um das Gehäuse 7 herum sind Kornsensoren 26 jeweils so angeordnet, dass sie von an einem der Abschnitte 10a1, 10a2, 10a3, 10a4 austretendem Korn getroffen werden. Es handelt sich um akustische Sensoren, die das von austretenden Körnern verursachte Geräusch registrieren, und die mit ihnen verbundene Steuereinheit 25 zählt die von den auftreffenden Körnern pro Zeiteinheit verursachten Impulse und misst auf diese Weise die an jedem Abschnitt austretende Kornmenge.

Der Rückführboden 12, auf den die ausgetretenen Körner schließlich fallen, ist entsprechend den Gruppen von Lamellen 23 in Querrichtung in beispielsweise vier Abschnitte 12a bis 12d unterteilt, die jeweils die an einem der Abschnitte 10a1, 10a2, 10a3, 10a4 ausgetretenen Körner auffangen und zu den Siebböden 15 weiter befördern. Unter den Siebböden 15 sind weitere Kornsensoren 27 in der Anzahl von Abschnitten 10a1, 10a2, 10a3, 10a4 des Abscheidekorbes 10a entsprechender Zahl und Anordnung platziert. Auch diese sind mit der Steuereinheit 25 verbunden, die anhand der von ihnen gelieferten Impulse in der Lage ist, zum einen den Korndurchsatz der Siebböden 15 und zum anderen durch Vergleichen der Signale von den verschiedenen Kornsensoren 27 die Verteilung des Korns über die Breite der Siebböden 15 hinweg einzuschätzen. Eine zu korrigierende Ungleichverteilung kann z.B. dann angenommen werden, wenn der für einen der Abschnitte mit Hilfe der zugeordneten Sensoren 26 und/oder 27 festgestellte Korndurchsatz von einem Mittelwert, der über alle anderen Abschnitte oder über alle Abschnitte insgesamt gebildet sein kann, um mehr als eine vorgegebene Differenz abweicht. Wenn eine Ungleichverteilung festgestellt wird, steuert die Steuereinheit 25 die Linearaktoren 24 an, um die Spalte einer Gruppe von Lamellen 23, die zu viel Gut durchlassen, zu verengen oder die Breite der anderen Spalte zu vergrößern, um so eine gleichmäßige Verteilung des Korns auf den Siebböden 15 zu erreichen. Welche dieser beiden Alternativen gewählt wird, oder ob beide gleichzeitig gewählt werden, kann davon abhängig gemacht werden, ob der Gesamtzufluss an vorgereinigtem Material in die zweite Trennstufe oberhalb, unterhalb oder innerhalb eines Zielbereiches liegt. Lokale Überladungen der Siebböden 15, die zu einem schlechten Reinigungsergebnis führen, werden so vermieden.

Die Abschnitte 12a bis 12d des Rückführbodens 12, die hier voneinander durch sich in Längsrichtung des Förderbodens erstreckende vertikale Stege 28 abgegrenzt sind, haben jeweils gleiche Breite, so dass, wenn der Durchsatz an Körnern durch jeden Abschnitt des Abscheidekorbes 10a gleich ist, eine gleiche Schichtdicke des abgeschiedenen Materials auf den einzelnen Abschnitten des Rückführbodens 12 und infolgedessen auch eine gleichmäßige Verteilung über die Breite der Siebböden 15 hinweg resultiert.

Mit Hilfe der Sensoren 26 bzw. 27 kann nicht nur die Kornmenge in jedem einzelnen Abschnitt des Rückführbodens 12 abgeschätzt werden, sondern auch der Gesamtzufluss an Material zur zweiten Trennstufe. Wenn ein oberer Grenzwert für diesen Gesamtzufluss überschritten wird, so ist eine Reinigung mit der gewünschten Qualität in der zweiten Trennstufe nicht mehr gewährleistet. Die Steuereinheit 25 überwacht daher auch diesen Gesamtzufluss, und erzeugt ein erstes Befehlssignal, wenn sie feststellt, dass dieser Grenzwert überschritten ist. Dieses Befehlssignal kann direkt zum Ansteuern eines Fahrwerkantriebs des Mähdreschers herangezogen werden, um bei Überschreitung des Grenzwerts dessen Fahrgeschwindigkeit und proportional dazu den Durchsatz der Trennstufen so weit zu verringern, dass eine ordnungsgemäße Trenngenauigkeit wieder erreichbar ist.

Umgekehrt ist ein zweiter Grenzwert für den Materialzustrom zur zweiten Trennstufe definiert, der niedriger als der erste Grenzwert ist, und dessen Unterschreitung zur Erzeugung eines zweiten Befehlssignals durch die Steuereinheit 25 führt. Dieses zweite Befehlssignal zeigt an, dass der Mähdrescher langsamer fährt, als unter wirtschaftlichen Gesichtspunkten wünschenswert wäre, und es wird eingesetzt, um die Fahrgeschwindigkeit des Mähdreschers zu erhöhen.

Alternativ können die zwei Befehlssignale auch eingesetzt werden, um eine für den Fahrer wahrnehmbare Anzeige anzusteuern, die den Fahrer darauf aufmerksam macht, dass der Materialzustrom zur zweiten Trennstufe außerhalb des gewünschten Bereichs liegt. Bei dieser Ausgestaltung obliegt es dem Fahrer, die Fahrgeschwindigkeit des Mähdreschers anhand dieser Anzeige zu steuern.

Es liegt im Rahmen der Erfindung, dass sich abweichend vom dargestellten Ausführungsbeispiel der Rückführboden 12 über die gesamte Länge der in vertikaler Richtung oberhalb des Rückführbodens 12 angeordneten Abscheideeinrichtung 6 erstreckt. Damit wird es möglich, an jeder beliebigen Stelle der Abscheideeinrichtung 6 in erfindungsgemäßer Weise die aus der Abscheideeinrichtung 6 austretenden Materialströme und deren Verteilung auf dem Rückführboden 12 zu erfassen.

### Bezugszeichen

- 11.: Fördereinrichtung
- 12.: Drescheinrichtung
- 13.: Dreschtrommel
- 14.: Dreschkorb
- 15.: Leittrommel
- 16.: Abscheideeinrichtung
- 17.: Gehäuse
- 18.: Förderorgan
- 19.: Rippe
- 10a,b,c: Abscheidekörbe/Abscheideflächen

- 10a1, 10a2, 10a3, 10a4: Abschnitte
- 11.: Förderboden
- 12.: Rückführboden
- 13.: Rutsche
- 14.: Gebläse
- 15.: Siebboden
- 16.: 1. Leitboden
- 17.: Schnecke
- 18.: 2. Leitboden
- 19.: Schnecke
- 20.: Schnecke
- 21.: Segment
- 22.: Segment
- 23.: Lamelle
- 24.: Linearaktuator
- 25.: Steuereinheit
- 26.: Kornsensor
- 27.: Kornsensor
- 28.: Steg

## Patentansprüche

1. Vorrichtung zum Trennen eines Erntegutstroms, der Nutzmaterial und Abfallmaterial enthält, in einen Nutzmaterialstrom und einen Abfallmaterialstrom, in denen jeweils das Nutzmaterial bzw. das Abfallmaterial konzentriert sind, mit einer ersten Trennstufe (2, 6), der der Erntegutstrom zugeführt wird und die eine Abscheidefläche mit einer Vielzahl von Öffnungen aufweist, durch die ein bevorzugt aus dem Nutzmaterial bestehender Strom, als vorgereinigter Strom bezeichnet, hindurchtritt, während das Abfallmaterial überwiegend zurückgehalten wird, und einer zweiten Trennstufe (11, 12, 14, 15), in dem an dem auf einem Förderboden (11, 12) verteilten vorgereinigten Strom eine Nachreinigung vorgenommen wird, **dadurch gekennzeichnet, dass** die Abscheidefläche (10) in eine Mehrzahl von Abschnitten (10a1, 10a2, 10a3, 10a4) unterteilt ist, die quer zu einer Förderrichtung des Erntegutstroms in der ersten Trennstufe (6) nebeneinander liegen, deren Durchlässigkeit für den vorgereinigten Strom individuell einstellbar ist, und dass jedem dieser Abschnitte der Abscheidefläche (10a) ein Abschnitt (11a bis 11d; 12a bis 12d) der Förderböden (11, 12) zugeordnet ist, auf den der von dem betreffenden Abschnitt der Abscheidefläche (10a) durchgelassene vorgereinigte Strom gelangt.

2. Vorrichtung nach Anspruch 1, **dadurch gekennzeichnet, dass** die Abschnitte (11a bis 11 d) und (12a bis 12d) der Förderböden (11, 12) quer zu einer Förderrichtung des vorgereinigten Materials auf der Förderboden (11, 12) nebeneinander liegen.

3. Vorrichtung nach einem der vorhergehenden Ansprüche, **dadurch gekennzeichnet, dass** zumindest einem der Abschnitte (11 a, 11 b, 11 c, 11 d) des Förderbodens (11) wenigstens ein Sensor (26, 27) zum Abschätzen der Menge an vorgereinigtem Material auf dem Abschnitt zugeordnet ist.

4. Vorrichtung nach Anspruch 3, **gekennzeichnet durch** eine Steuereinheit (25), die an die Sensoren (26, 27) und an verstellbare Elemente (23) der ersten Trennstufe (6) angeschlossen ist, um deren Durchlässigkeit anhand der Abschätzungsergebnisse der Sensoren (26, 27) zu regeln.

5. Vorrichtung nach einem der vorhergehenden Ansprüche, **dadurch gekennzeichnet, dass** sie eine fahrbare Erntemaschine, insbesondere eine Getreideerntemaschine, ist.

6. Vorrichtung nach Anspruch 4 und 5, **dadurch gekennzeichnet, dass** die Steuereinheit (25) an ein Antriebsaggregat der Vorrichtung gekoppelt ist, um die Fahrgeschwindigkeit der Vorrichtung zu verringern, wenn die Gesamtmenge des von den Sensoren (26, 27) abgeschätzten vorgereinigten Materials einen Grenzwert überschreitet und/oder zu erhöhen, wenn sie einen Grenzwert unterschreitet.

7. Vorrichtung nach Anspruch 4 und Anspruch 5, **dadurch gekennzeichnet, dass** die Steuereinheit (25) an ein Anzeigeelement der Vorrichtung gekoppelt ist, um einem Bediener eine Aufforderung anzuzeigen, die Fahrgeschwindigkeit der Vorrichtung zu verringern, wenn die Gesamtmenge des von den Sensoren (26, 27) abgeschätzten vorgereinigten Materials einen Grenzwert überschreitet bzw. sie zu erhöhen, wenn die Gesamtmenge einen Grenzwert unterschreitet.

8. Vorrichtung nach einem der vorhergehenden Ansprüche, **dadurch gekennzeichnet, dass** die Abscheidefläche (10a) einen Rotor (8) auf zumindest einem Teil seines Umfangs umgibt.

9. Verfahren zum Betreiben der Vorrichtung nach einem der vorhergehenden Ansprüche, mit den Schritten:
a) Abschätzen der Menge an vorgereinigtem Material auf jedem Abschnitt (11 a, 11 b, 11 c, 11 d) der Förderböden (11, 12);
b) Vergrößern der Durchlässigkeit eines Abschnitts (10a1, 10a2, 10a3, 10a4) der Abscheidefläche (10a), die quer zu einer Förderrichtung des Erntegutstroms in der ersten Trennstufe (6) nebeneinander liegen, wenn die im zugeordneten Abschnitt der Förderböden (11, 12) abgeschätzte Menge einen Grenzwert unterschreitet;
c) Verringern der Durchlässigkeit eines Abschnitts (10a1, 10a2, 10a3, 10a4) der Abscheidefläche (10a), wenn die im zugeordneten Abschnitt der Förderböden abgeschätzte Menge einen Grenzwert überschreitet.

10. Verfahren nach Anspruch 9, **dadurch gekennzeichnet, dass** die Grenzwerte für einen Abschnitt anhand eines wenigstens über die geschätzten Mengen der anderen Abschnitte gebildeten Mittelwerts festgelegt werden.

11. Verfahren nach Anspruch 9, **dadurch gekennzeichnet, dass** die Grenzwerte für einen Abschnitt vom Bediener vorgebbar sind und/oder fruchtartabhängig festgelegt sind.

12. Verfahren nach Anspruch 9 oder 10, **dadurch gekennzeichnet, dass** die Vorrichtung eine selbstfahrende Erntemaschine ist und eine Anweisung erzeugt wird, die Fahrgeschwindigkeit der Erntemaschine herabzusetzen, wenn die abgeschätzte Gesamtmenge des vorgereinigten Materials einen Grenzwert überschreitet bzw. sie zu erhöhen, wenn die Gesamtmenge einen Grenzwert unterschreitet.

## Claims

1. Apparatus for separating a crop material flow which contains usable material and waste material into a usable material flow and a waste material flow in each of which the useful material and the waste material are respectively concentrated, comprising a first separation stage (2, 6) to which the crop material flow is fed and which has a separation surface having a plurality of openings, through which a flow preferably comprising the usable material, referred to as the pre-cleaned flow, passes, while the waste material is predominantly retained, and a second separation stage (11, 12, 13, 14) in which a post-cleaning operation is performed on the pre-cleaned flow distributed on a conveyor plate (11, 12), **characterised in that** the separation surface (10) is subdivided into a plurality of portions (10a1, 10a2, 10a3, 10a4) which are disposed in mutually juxtaposed relationship transversely to a conveyor direction of the crop material flow in the first separation stage (6) and whose transmissibility for the pre-cleaned flow is individually adjustable, and that associated with each of said portions of the separation surface (10a) is a portion (11a to 11d; 12a to 12d) of the conveyor plates (11, 12), on to which the pre-cleaned flow which has been let through by the portion in question of the separation surface (10a) passes.

2. Apparatus according to claim 1 **characterised in that** the portions (11a to 11d) and (12a to 12d) of the conveyor plates (11, 12) are disposed in mutually juxtaposed relationship transversely relative to a conveyor direction of the pre-cleaned material on the conveyor plates (11, 12).

3. Apparatus according to one of the preceding claims **characterised in that** there is associated with at least one of the portions (11a, 11b, 11c, 11d) of the conveyor plate (11) at least one sensor (26, 27) for estimating the amount of pre-cleaned material on the portion.

4. Apparatus according to claim 3 **characterised by** a control unit (25) connected to the sensors (26, 27) and the adjustable elements (23) of the first separation stage (6) to regulate the transmissibility thereof on the basis of the estimation results from the sensors (26, 27).

5. Apparatus according to one of the preceding claims **characterised in that** it is a mobile harvester, in particular a grain harvester.

6. Apparatus according to claims 4 and 5 **characterised in that** the control unit (25) is coupled to a drive assembly of the apparatus to reduce the travel speed of the apparatus if the total amount of the pre-cleaned material estimated by the sensors (26, 27) exceeds a limit value and/or to increase same if it falls below a limit value.

7. Apparatus according to claim 4 and claim 5 **characterised in that** the control unit (25) is coupled to a display element of the apparatus to display to an operator a requirement to reduce the travel speed of the apparatus if the total amount of the pre-cleaned material estimated by the sensors (26, 27) exceeds a limit value or to increase it if the total amount falls below a limit value.

8. Apparatus according to one of the preceding claims **characterised in that** the separation surface (10a) surrounds a rotor (8) over at least a part of its periphery.

9. A method of operating an apparatus according to one of the preceding claims comprising the steps:
a) estimating the amount of pre-cleaned material on each portion (11a, 11b, 11c, 11d) of the conveyor plates (11, 12);
b) increasing the transmissibility of a portion (10a1, 10a2, 10a3, 10a4) of the separation surface (10a), which are disposed in mutually juxtaposed relationship transversely relative to a conveyor direction of the crop material flow in the first separation stage (6) if the amount estimated in the associated portion of the conveyor plates (11, 12) exceeds a limit value; and
c) reducing the transmissibility of a portion (10a1, 10a2, 10a3, 10a4) of the separation surface (10a) if the amount estimated in the portion associated therewith of the conveyor plates exceeds a limit value.

10. A method according to claim 9 **characterised in that** the limit values for a portion are established on the basis of a mean value at least formed over the estimated amounts of the other portions.

11. A method according to claim 9 **characterised in that** the limit values for a portion can be predetermined by the operator and/or established in dependence on the kind of crop.

12. A method according to claim 9 or claim 10 **characterised in that** the apparatus is a self-propelled harvester and an instruction is produced to reduce the travel speed of the harvester if the estimated total amount of the pre-cleaned material exceeds a limit value or to increase it if the total amount falls below a limit value.

## Revendications

1. Dispositif de séparation d'un flux de produit récolté, qui contient du matériau utile et du matériau rejeté, en un flux de matériau utile et en un flux de matériau rejeté dans desquels le matériau utile et, respectivement, le matériau rejeté sont concentrés, comprenant un premier étage de séparation (2, 6) auquel est amené le flux de produit récolté et qui comporte une surface de séparation avec une pluralité d'ouvertures à travers lesquelles passe un flux constitué de préférence par le matériau utile et appelé flux prénettoyé, tandis que le matériau rejeté est majoritairement retenu, et comprenant un second étage de séparation (11, 12, 14, 15) dans lequel un postnettoyage est effectué sur le flux prénettoyé réparti sur une table de préparation (11, 12), **caractérisé en ce que** la surface de séparation (10) est divisée en une pluralité de portions (10a1, 10a2, 10a3, 10a4) qui sont disposées côte à côte transversalement à une direction de convoyage du flux de produit récolté dans le premier étage de séparation (6) et dont l'aptitude au passage du flux prénettoyé est réglable individuellement, et **en ce qu'**à chacune de ces portions de la surface de séparation (10a) est associée une portion (11a à 11d ; 12a à 12d) des tables de préparation (11, 12), à laquelle parvient le flux prénettoyé admis à traverser la portion correspondante de la surface de séparation (10a).

2. Dispositif selon la revendication 1, **caractérisé en ce que** les portions (11a à 11d) et (12a à 12d) des tables de préparation sont disposées côte à côte transversalement à une direction de convoyage du matériau prénettoyé sur les tables de préparation (11, 12).

3. Dispositif selon une des revendications précédentes, **caractérisé en ce qu'**à au moins une des portions (11a, 11b, 11c, 11d) de la table de préparation (11) est associé au moins un capteur (26, 27) pour évaluer la quantité de matériau prénettoyé présente sur la portion.

4. Dispositif selon la revendication 3, **caractérisé par** une unité de commande (25) qui est connectée aux capteurs (26, 27) et à des éléments réglables (23) du premier étage de séparation (6) afin de régler l'aptitude au passage de celui-ci à l'aide des résultats d'évaluation des capteurs (26, 27).

5. Dispositif selon une des revendications précédentes, **caractérisé en ce qu'**il est une machine de récolte roulante, en particulier une machine de récolte de céréales.

6. Dispositif selon la revendication 4 et 5, **caractérisé en ce que** l'unité de commande (25) est couplée à un organe d'entraînement du dispositif pour réduire la vitesse de marche du dispositif quand la quantité totale de matériau prénettoyé évalué par les capteurs (26, 27) surpasse une valeur limite et/ou pour l'augmenter quand elle soupasse une valeur limite.

7. Dispositif selon la revendication 4 et la revendication 5, **caractérisé en ce que** l'unité de commande (25) est couplée à un élément d'affichage du dispositif pour afficher à un utilisateur une invitation à réduire la vitesse de marche du dispositif quand la quantité totale du matériau prénettoyé évalué par les capteurs (26, 27) surpasse une valeur limite et, respectivement, à l'augmenter quand la quantité totale soupasse une valeur limite.

8. Dispositif selon une des revendications précédentes, **caractérisé en ce que** la surface de séparation (10a) entoure un rotor (8) sur au moins une partie de sa périphérie.

9. Procédé pour exploiter le dispositif selon une des revendications précédentes, comprenant les étapes consistant à :
a) évaluer la quantité de matériau prénettoyé présente sur chaque portion (11a, 11b, 11c, 11d) des tables de préparation (11, 12) ;
b) augmenter l'aptitude au passage d'une portion (10a1, 10a2, 10a3, 10a4) de la surface de séparation (10a), lesdites portions étant disposées côte à côte transversalement à une direction de convoyage du flux de produit récolté dans le premier étage de séparation (6), quand la quantité évaluée dans la portion associée des tables de préparation (11, 12) soupasse une valeur limite ;
c) réduire l'aptitude au passage d'une portion (10a1, 10a2, 10a3, 10a4) de la surface de séparation (10a) quand la quantité évaluée dans la portion associée des tables de préparation surpasse une valeur limite.

10. Procédé selon la revendication 9, **caractérisé en ce que** les valeurs limites pour une portion sont fixées à l'aide d'une valeur moyenne formée au moins à l'aide des quantités évaluées des autres portions.

11. Procédé selon la revendication 9, **caractérisé en ce que** les valeurs limites pour une portion peuvent être préaffectées par l'utilisateur et/ou sont fixées en fonction du type de récolte.

12. Procédé selon la revendication 9 ou 10, **caractérisé en ce que** le dispositif est une machine de récolte automotrice et **en ce qu'**une instruction est générée pour réduire la vitesse de marche de la machine de récolte quand la quantité totale évaluée de matériau prénettoyé surpasse une valeur limite ou, respectivement, pour l'augmenter quand la quantité totale soupasse une valeur limite.
